# EUROPÄISCHE PATENTSCHRIFT

(11) **EP 1 812 154 B1**
(45) Veröffentlichungstag und Bekanntmachung des Hinweises auf die Patenterteilung: **19.08.2020**
(21) Anmeldenummer: 05806947.7
(22) Anmeldetag: 12.11.2005
(51) Int. Cl.: B01J 8/02, C01B 3/38, B01J 19/24, B01J 19/00, B01F 5/20, B01F 3/02, H01M 8/0612, B01J 4/00, B01F 5/00

(54) **MISCHKAMMER FÜR EINEN REFORMER SOWIE VERFAHREN ZUM BETREIBEN DERSELBEN**
REFORMER MIXING CHAMBER AND METHOD FOR THE OPERATION THEREOF
CHAMBRE DE MELANGE POUR REFORMEUR ET PROCEDE POUR FAIRE FONCTIONNER CELLE-CI

(30) Priorität: 17.11.2004 DE 102004055425
(43) Veröffentlichungstag der Anmeldung: 01.08.2007
(73) Patentinhaber: Forschungszentrum Jülich GmbH, 52425 Jülich (DE)
(72) Erfinder: PORS, Zdenek, 52428 Jülich (DE); TSCHAUDER, Andreas, 49492 Westerkappeln (DE); PASEL, Joachim, 52428 Jülich (DE); PETERS, Ralf, 52146 Würselen (DE); STOLTEN, Detlef, 52076 Aachen (DE)
(86) Internationale Anmeldenummer: PCT/DE2005/002041
(87) Internationale Veröffentlichungsnummer: WO 2006/053534

(56) Entgegenhaltungen:
- WO-A-2005/097312
- CA-A- 621 472
- US-A- 4 188 368
- US-A- 6 045 772
- US-A1- 2001 042 703
- US-A1- 2003 033 753

## Beschreibung

Die Erfindung betrifft eine effektive Mischkammer für einen Reformer, insbesondere für einen Reformer zur Erzeugung von Mitteldestillaten, sowie ein Verfahren zum Betreiben dieser Mischkammer.

### Stand der Technik

Neben der klassischen Dampfreformierung zur Wasserstoffproduktion stellt die autotherme Reformierung eine vielversprechende Alternative dar. Dabei reagiert ein Sauerstoff-Wasser-Gemisch im Reaktor ohne externe Wärmequelle mit Kohlenwasserstoff CₙHₘ entsprechend folgender Gleichungen:

| | |
|---|---|
| CₙHₘ + n H₂O → n CO + (m/2 + n) H₂ | ΔH_{R} > 0 (Dampfreformierung) |
| CₙHₘ + n/2 O₂ → m/2 H₂ + n CO | ΔH_{R} < 0 (partielle Oxidation) |

Für Methan CH₄ (n = 1, m = 4) stellen sich die Reaktionsgleichungen wie folgt dar:

| | |
|---|---|
| CH₄ + H₂O => CO + 3H₂ | ΔH_{R} = + 206 kJ/mol |
| CH₄ + 0, 5 O₂ => CO + 2H₂ | ΔH_{R} = - 35 kJ/mol |

Der Sauerstoff wird in der Regel mittels Luft bereitgestellt. Die Wärme, die für die Dampfreformierung notwendig ist, wird durch die partielle Oxidation des Kohlenwasserstoffs zur Verfügung gestellt. Der Prozess kann somit in einem autothermen Betriebsmodus gefahren werden. Prinzipiell ist ein höherer Wirkungsgrad möglich, da systembezogene Enthalpieverluste nur durch den warmen Produktgasstrom möglich sind. Besonders für den Gebrauch von Brennstoffzellensystemen als Fahrzeugantrieb mit Benzin oder Diesel als Kraftstoff scheint die autotherme Reformierung sehr viel versprechend. Dies ist durch die hohe Reaktionstemperatur (ca. 800 °C) und eine gute Reaktionskinetik zu erklären.

Neben der Entwicklung von geeigneten Katalysatoren für die autotherme Reformierung von Mitteldestillaten hängt die Einsatzfähigkeit eines Reformers wesentlich davon ab, ob optimierte Betriebsbedingungen eingestellt werden können.
Die Reformierung von flüssigen Kraftstoffen stellt hohe Ansprüche an die Vorbereitung der Edukte, bevor sie in die Reaktionszone des Reaktors, d. h. des Reformers eintreten.

Eine schlechte Qualität des Eduktgemisches hat regelmäßig eine negative Wirkung auf den Umsatz des Kraftstoffs. Um die Rußbildung und so genannte "Hot Spots" in der Reaktionszone zu vermeiden, ist es insbesondere wichtig, dass die O₂/C- und H₂O/C-Verhältnisse im Gemisch möglichst konstant bleiben und nicht schwanken.

Die Mischkammer eines Reformers hat daher die folgenden Funktionen:
- Zuführung des Kraftstoffs
- Zerstäubung und Verdampfung des Kraftstoffs
- Gemischbildung (Homogenisierung der Kraftstoffkonzentration im Luft-Dampf-Strom)
- Homogenisierung der Durchflussverteilung (Fließgeschwindigkeitsprofil)

Aus dem Stand der Technik sind zwei prinzipielle Möglichkeiten der Kraftstoffzuführung bekannt, die gasförmige Zuführung über einen externen Verdampfer und die interne Einspritzung und Zerstäubung des flüssigen Kraftstoffs.
Eine separate Verdampfung des Kraftstoffs wird dabei häufig bei reinen Stoffen, wie beispielsweise Methanol oder iso-Oktan angewandt. Bei komplexeren Kraftstoffmischungen wie Benzin oder Diesel steigt die Gefahr, dass sich auf der heißen Oberfläche des Verdampfers kohlenstoffhaltige Ablagerungen bilden und abscheiden. Nachteilig wird bei diesen Verfahren eine zusätzliche externe Wärmequelle benötigt und die Steuerung gestaltet sich aufgrund der Wärmekapazität des Verdampfers regelmäßig schwierig.

Eine direkte Einspritzung des Kraftstoffs erfolgt üblicherweise durch eine Einstoff- oder eine Mehrstoffdüse. Bei einer Einstoffdüse wird der Kraftstoff mit hohem Druck zerstäubt. Beispiele für geeignete Einstoffdüsen sind die kontinuierliche Dralldruckzerstäubungsdüse, wie sie in kleineren Heizkesseln für Heizöl üblich ist, oder der Hochdruckinjektor, wie sie in heutigen Benzin- und Dieselmotoren eingesetzt werden. Auch zu nennen ist das Venturirohr, welches zum Ansaugen und Zerstäuben einer Flüssigkeit dient.
Bei Verwendung einer Mehrstoffdüse wird der Kraftstoff in der Regel zusammen mit einem Gasstrom zerstäubt. Solche Düsen erzeugen sehr feine Tropfen mit einem Durchmesser von ca. 10 bis 30 µm. Es ist auch schon eine Dreistoffdüse bekannt, bei der neben dem flüssigen Kraftstoff und Luft zusätzlich überhitzter Wasserdampf durch die Düse geleitet wird.

Eine derartige Mehrstoffdüse zur Zerstäubung des flüssigen Kraftstoffs ist aus US 6,045,772 A bekannt.

Zur vollständigen Verdampfung des zerstäubten Kraftstoffs wird viel Wärme benötigt, die beispielsweise durch einen heißen, gasförmigen Eduktstrom aus Luft und/oder Wasserdampf zugeführt wird. Dabei ist jedoch die Tatsache zu beachten, dass bei bestimmten Bedingungen, die für die Verdampfung benötigte Temperatur des Gasstromes die Zündtemperatur des Kraftstoffs überschritten werden kann.

Alternativ kann die benötigte Wärme auch durch eine teilweise Verbrennung des Kraftstoffs erzielt, oder die Mischkammer durch eine externe Heizung erwärmt werden.

Bei allen vorgenannten Verfahren können jedoch durch die Zersetzung des Kraftstoffs nachteilig kohlenstoffhaltige Ablagerungen auftreten, die sich insbesondere auf dem Reformierungskatalysator in Form von Ruß abscheiden und so zu einer zunehmend verringerten Aktivität desselben führen.

### Aufgabe und Lösung

Die Aufgabe der Erfindung ist es, eine besonders effektive Mischkammer für einen Reformer bereit zu stellen, der eine besonders gleichmäßige Verteilung der Edukte und eine Homogenisierung der Durchflussverteilung ermöglicht, und somit besonders effektiv zu betreiben ist. Ferner ist es die Aufgabe der Erfindung, eine Mischkammer bereit zu stellen, die eine unerwünschte Rußbildung und Ablagerung auf dem Reformierungskatalysator weitgehend vermeidet und den Kraftstoff im sich anschließenden Reformer möglichst vollständig umsetzt. Dabei sollte die Mischkammer insbesondere auch für schwefelarmen Diesel und Kerosin einsetzbar sein.

Die Aufgaben der Erfindung werden gelöst durch ein Verfahren zum Betreiben einer Mischkammer mit der Gesamtheit an Merkmalen gemäß Hauptanspruch, sowie durch eine Mischkammer für einen Reformer gemäß Nebenanspruch. Vorteilhafte Ausführungsformen des Verfahrens und der Vorrichtung finden sich in den jeweils darauf rückbezogenen Ansprüchen wieder.

### Gegenstand der Erfindung

Die Erfindung beschreibt eine Mischkammer, in der ein Kraftstoff und ein Oxidationsmittel gemischt werden, wobei dieses Gemisch anschließend zur Zuführung zu einem Reformierungskatalysator vorgesehen ist. Eine solche Mischkammer könnte beispielsweise Teil eines autothermen Reformers (ATR) sein. Die erfindungsgemäße Mischkammer für einen Reformer besteht aus Metall oder Keramik.

Keramik ist vorteilhaft, da in der Regel eine geringere thermische Isolierung benötigt und vor allem kann aber bei der Verwendung von Edelstahl das anwesende Nickel einige unerwünschte Reaktionen als Katalysator verursachen. Solche Nachteile können bei Verwendung von Keramik verhindert werden.

Die erfindungsgemäße Mischkammer gemäss Anspruch 9 weist eine Zuführungsleitung mit einer : Einstoffdüse für einen flüssigen Kraftstoff, eine Zuführungsleitung für Wasserdampf sowie eine Zuführungsleitung für ein Oxidationsmittel, insbesondere für Luft auf. Die Mischkammer kann in zwei Zonen unterteilt werden, bei der in der ersten Zone die Verdampfung des Kraftstoffs und die gleichmäßige Verteilung stattfindet, während in der zweiten Zone, der gleichmäßig verdampfte Kraftstoff intensiv und gleichförmig mit einem Oxidationsmittel vermischt wird.

Die Zuleitung und die : Einstoffdüse für den Kraftstoff und die Zuführung für den Wasserdampf sind innerhalb der ersten Zone derart angeordnet, dass die Düse für den Kraftstoff benachbart zu der Zuführung des Wasserdampfes angeordnet ist, so dass der ins Innere der Mischkammer eingespritzte und zerstäubte Kraftstoff sofort im heißen Wasserdampf verdampft.
Abstromig zu dem eingeleiteten Kraftstoff und dem Wasserdampf ist an der Grenze zur zweiten Zone der Mischkammer wenigstens eine Zuführung für das Oxidationsmittel, bevorzugt für Luft, angeordnet. Die Zuführung kann vorteilhaft mehrere Auslässe, beispielsweise in Form eines Düsenkranzes aufweisen. Es hat sich herausgestellt, dass zur Erreichung einer schnellen Mischung und einer gute Gemischqualität eine ausgeprägte Wirbelstruktur notwendig ist. Damit die Gase bei möglichst hohen Geschwindigkeiten gemischt werden, ist eine Verengung der Mischkammer in dem Bereich der Zuführung vorgesehen. Das Oxidationsmittel wird vorteilhaft radial aus mehreren engen Öffnungen zugeführt. Es handelt sich dabei aber explizit nicht um das Prinzip eines Venturi-Rohrs.

Bei dem erfindungsgemäßen Verfahren zum Betreiben der Mischkammer wird lediglich das Wasser thermisch vorbehandelt, d. h. verdampft und überhitzt. Der Wasserdampf wird insbesondere mit einer Temperatur im Bereich von 350 °C bis 500 °C in die erste Zone der Mischkammer eingeleitet. Der mit Hilfe einer Einstoffdüse in die erste Zone eingespritzte Kraftstoff, der kalt, das bedeutet beispielsweise mit Raumtemperatur zugeführt wird, verdampft augenblicklich. Die Wasserdampfatmosphäre in der ersten Zone verhindert vorteilhaft eine Kohlenstoffbildung. Die Temperatur der ersten Zone der Mischkammer weist während des Betriebs eine wenigstens um 50 K höhere Temperatur als die Siedetemperatur des Kraftstoffs auf.

Erfindungsgemäß liegt die Mischkammer in Form eines Zyklons vor, der in Richtung auf die Düse für den Kraftstoff und in Richtung auf die zweite Zone eine Verjüngung aufweist. Diese Verjüngung bewirkt vorteilhaft, dass sich au-ßerhalb der eigentlichen Vermischungs- und Verdampfungszone störende Wirbel regelmäßig deutlich verringern bzw. ganz verhindern lassen. Die Verjüngung rund um die Düse für den Kraftstoff hat sich als sehr effektiv herausgestellt. Die Reduzierung des Durchmessers der ersten Zone beträgt maximal 85 % des Durchmessers in der Verdampferzone.

In vorteilhaften Ausführungsformen liegen jeweils die ersten Zonen der Mischkammer als Zyklonabscheider vor. Dies ist insbesondere dann von Vorteil, wenn der eingesetzte Kraftstoff eine gewisse Menge an schwer siedenden Kohlenwasserstoffen und Mineralien aufweist. Bei diesen Kraftstoffen ist eine vollständige Verdampfung unter den gegebenen Rahmenbedingungen physikalisch nicht möglich. Damit die nicht verdampften Kraftstoffrückstände nicht bis zur Katalysatoroberfläche des Monoliths, das heißt der mit Edelmetallen beschichteten keramischen Träger mit Wabenstruktur, gelangen, wo sie zu Vergiftungen und damit zu einer Senkung der Aktivität führen würden, ist es wichtig, diese aus dem Gasstrom zu entfernen. Wünschenswert wäre die Entfernung diese Partikel noch vor der Zuführung des Oxidationsmittels in der zweiten Zone.

Zu diesem Zweck wird das dynamische Prinzip ausgenutzt, durch welches man mit Hilfe der Zentrifugalkraft, beispielsweise in einem Zyklonabscheider, nicht verdampfte Flüssigkeit aus einem Gasstrom abtrennen kann. Allerdings hat es sich herausgestellt, dass es nicht wirksam ist, die erste Zone als klassischen Zyklon auszulegen, dem der Kraftstoff und der Wasserdampf beide tangential zugeführt werden. Vor der Zerstäuberdüse sollten mindestens 3 bis 4 cm freien Raum verbleiben, um zunächst die Verdampfung zu ermöglichen, bevor die Kraftstofftröpfchen die Wand der Mischkammer, bzw. des Zyklons erreichen. Dafür müsste aber der Verdampfer relativ groß ausgelegt werden, insbesondere wenn auch noch die thermische Isolierung in Betracht gezogen wird.

Erfindungsgemäß ist bei der Mischkammer daher die Zerstäuberdüse für den Kraftstoff an der Stirnseite der Mischkammer in der Achse der Mischkammer und nur die Zuführung für den Wasserdampf tangential angeordnet. Zudem wird die Öffnung, die den Austritt aus dem Verdampfer, bzw. den Übergang zwischen erster und zweiter Zone darstellt, konstruktiv so in Richtung Zerstäuberdüse gelegt, dass sich zwischen der Wand des Verdampfers und der zweiten Zone ein ringförmiger Spalt ausbildet. Die nicht verdampften Partikel werden während des Betriebs regelmäßig durch die Zentrifugalkraft in diesen Spalt gelenkt, während die Gasphase zentral aus dem Verdampfer in die zweite Zone strömt. Die in dem Spalt gesammelten, schwer flüchtigen Partikel und Ablagerungen können somit nicht in den Katalysator gelangen und führen auch nicht zu einer Beeinträchtigung der übrigen Strömungsführung.

Die Einstoffdüse für die Kraftstoffeinspeisung (Zerstäuberdüse) weist in Richtung der zweiten Zone der Mischkammer. Dort wird dem vollständig verdampften und gleichmäßig verteilten Kraftstoff ein Oxidationsmittel zugeführt. Das Oxidationsmittel wird vorteilhaft ebenfalls in kaltem Zustand eingespeist. Für eine schnelle und gleichmäßige Verteilung des Oxidationsmittels weist die Zufuhrleitung für das Oxidationsmittel regelmäßig mehrere Öffnungen auf. Insbesondere ein Düsenkranz hat sich als sehr effektiv herausgestellt.

Die Zufuhr des Oxidationsmittels erfolgt kurz vor dem Eintritt in den Reformierungskatalysator. Dadurch kann die Zeitdauer vor Eintritt in den Reformierungskatalysator verringert werden, in der der gasförmige Kraftstoff dem Oxidationsmittel ausgesetzt ist. Somit wird die Gefahr des vorzeitigen Brennens oder Entzündens des Kraftstoff-Luft-Gemisches regelmäßig verringert, bzw. kann ganz verhindert werden.

Die Strömungsführung in der Mischkammer ist derart, dass es nicht zu einer Rezirkulation des mit dem Oxidationsmittel vermischten Kraftstoffs aus der zweiten Zone wieder zurück in die erste Zone kommen kann. Dadurch wird in der ersten Zone aufgrund des Sauerstoffmangels sichergestellt, dass es zu keiner Zündung kommt, und ferner, dass eine Rußbildung unterbunden wird.

### Spezieller Beschreibungsteil

Nachfolgend wird der Gegenstand der Erfindung anhand einiger Figuren näher erläutert, ohne dass der Gegenstand der Erfindung dadurch beschränkt wird. Es zeigen die
- Figur 1:: Schema der erfindungsgemäßen Mischkammer mit erster Zone **I** (Verdampfer), zweiter Zone **II** und Katalysatoreinrichtung **K.**
- Figur 2:: Prinzip der effektiven Zufuhr von oxidationsmittel innerhalb der zweiten Zone.
- Figur 3:: Ausführungsbeispiel für die Luftzuführung in Form eines Düsenkranzes
- Figur 4:: Prinzip der Abtrennung der nicht verdampften Kraftstoffpartikel aus dem Gasstrom.
- Figur 5:: Drei Ausführungsformen der erfindungsgemäßen Mischkammer, bei der die erste Zone **I** jeweils als Zyklon ausgebildet ist.

In den Figuren bedeutet:
- C: Kraftstoff
- H₂O: Wasserdampf
- O: Oxidationsmittel
- K: Katalysator
- SP: Spalt zur Abtrennung flüssiger Kraftstoffpartikel

Die Edukte eines Reformers sollten mittels exakter Dosierung, Gemischbildung, möglicherweise Verdampfung und homogener Durchflussverteilung in Richtung des Katalysators zur Verfügung gestellt werden. Dies wird in der erfindungsgemäßen Mischkammer realisiert. Als Beispiel wird für einen ATR mit einer Leistung von 3 kWₑₗ 3,6 kg/h Luft, 1,73 kg/h Wasser und 800 g/h Kraftstoff in die Mischkammer eingeleitet.

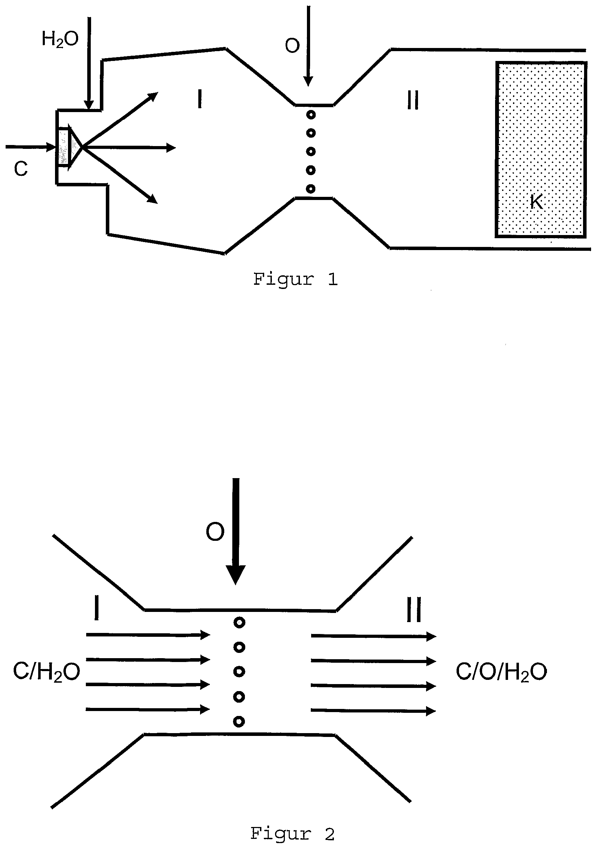

Die erfindungsgemäße Mischkammer weist dazu gemäß Figur 1 zwei Zonen auf, wobei sich an die zweite Zone **II** beispielsweise beim ATR regelmäßig eine Katalysatoreinrichtung K anschließt. Die erste Zone ist für die Verdampfung des Kraftstoffs und die Vermischung mit dem dazu benötigten Wasserdampf bestimmt.

Zur effektiven Strömungsführung innerhalb der Mischkammer ist diese vorteilhaft rotationssymmetrisch als Zyklon ausgestaltet. Die Verdampferzone **I** (erste Zone) weist eine Zuführung für flüssigen Kraftstoff **C** mit einer Düse auf. Diese ist zentral an einer Stirnfläche der Mischkammer angeordnet, so dass sich der aus der : Einstoffdüse austretende Strahl gleichmäßig und nahezu parallel zur Achse in der Mischkammer verteilen kann. Eine vorteilhafte Düse ist insbesondere eine Einstoffdüse mit einem Sprühwinkel von ca. 60 °. Die erzeugten Kraftstofftröpfchen **C** weisen regelmäßig eine Tröpfchengröße um ca. 30 µm auf. Die Temperatur im Verdampferteil wird regelmäßig um 400 °C eingestellt.

Benachbart zur : Einstoffdüse für den Kraftstoff (Zerstäuberdüse) ist die Zuführung für den Wasserdampf **H₂O** angeordnet. Die Zuführung erfolgt über wenigstens ein Rohr, mit einem typischen Durchmesser von ca. 3 mm bis 10 mm, welches derart ausgerichtet ist, dass der daraus entweichende Wasserdampf direkt in den aus der Düse austretenden Kraftstoff gerichtet ist. Die Düse ist tangential ausgerichtet, so dass der austretende Wasserdampf den austretenden Kraftstoff zur besseren Durchmischung in eine Rotationsbewegung versetzt.

In der zweiten Zone der Mischkammer **II** wird dann dem verdampften und mit Wasserdampf vermischten Gasstrom **H₂O/C** das Oxidationsmittel **O** zugeführt. Dies erfolgt durch wenigstens eine Zuführung. Vorteilhaft wird das Oxidationsmittel aber durch mehrerer Zuführungen, beispielsweise in Form eines Düsenkranzes zugeführt. Die Zuführungen können vorteilhaft auch von der radialen Richtung abweichend (bis ca. 15 °) angeordnet sein.
Erfindungsgemäß erfolgt die Zufuhr des Oxidationsmittels **O** an einer Verjüngung zwischen Zone I und Zone II, wie in Figur 2 gezeigt ist. Der Abstand zwischen der Oxidationszufuhr und der : Einstoffdüse für den Kraftstoff liegt beispielsweise bei 75 mm.

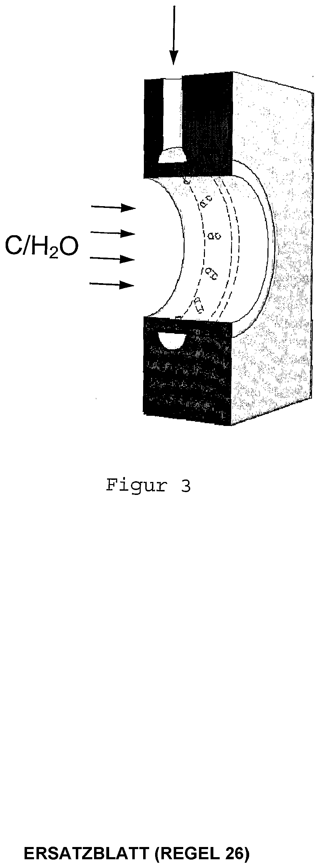

Figur 3 stellt eine vorteilhafte Ausgestaltung der Oxidationsmittelzuführung dar. Diese sieht die Zuführung von Luft durch ein Rohr vor. An der verjüngten Stelle ist von innen ein Schlitz in Form eines Ringes in die äußere Wand gedreht, die als Luftverteiler wirkt, und mit dem Zuführungsrohr verbunden ist. Durch eine innere Manschette wird die ringförmige Luftverteilung gegen das Innere abgeschirmt. Lediglich durch mehrere kleine Löcher, die durch die Manschette bis in den ringförmigen Luftverteiler reichen, ist eine Zuführung des Oxidationsmittels radial in das Innere der Mischkammer möglich.

Eine weitere Ausgestaltung sieht vor, dass die Löcher in der Manschette eine geringe Abweichung von ca. 5 bis 15 ° von der radialen Richtung aufweisen. Damit enthält das dadurch ausströmende Oxidationsmittel auch eine tangentiale Komponente, die zu einer stärkeren Verwirbelung und damit in der Regel zu einer effektiven Vermischung führt.

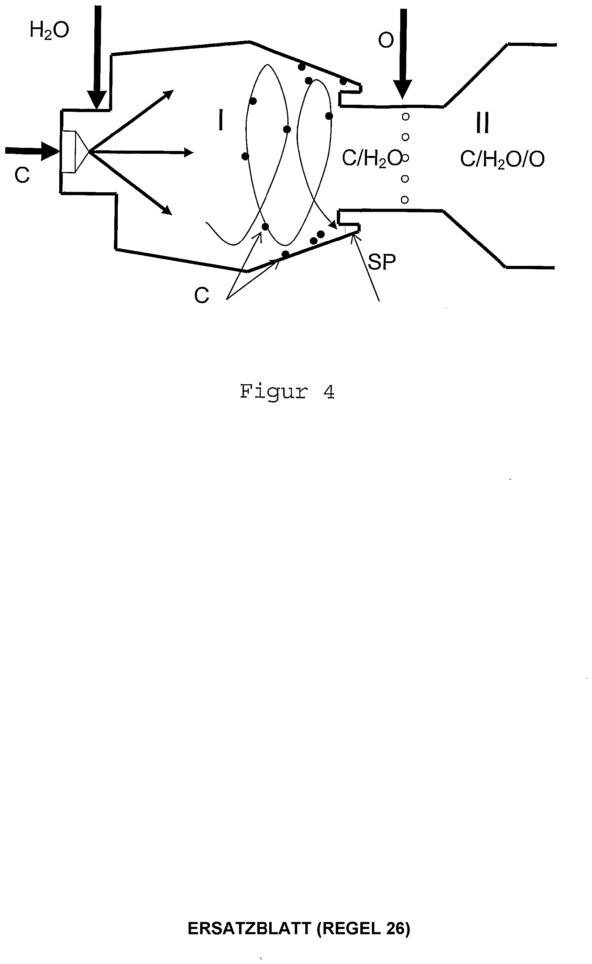

Die Figur 4 zeigt das Prinzip der als Zyklon ausgebildeten Verdampferzone **I.** Die nicht verdampften Kraftstofftröpfchen gelangen durch die Strömung an den äußeren Rand der Kammer und werden in dem Spalt **SP** aufgefangen, so dass sie nicht in die zweite Zone gelangen.

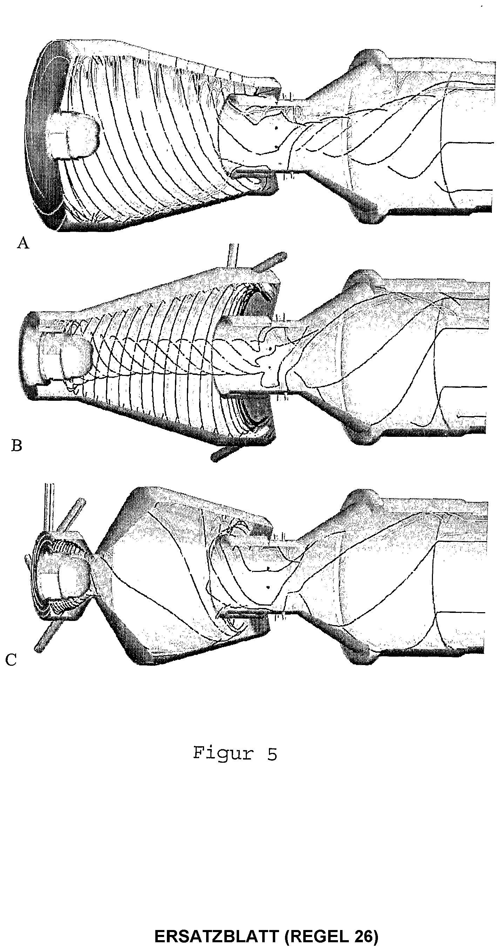

Drei unterschiedlicher Ausgestaltungen des als Zyklon ausgebildeten Verdampferteils der Mischkammer sind in Figur 5 dargestellt. Die Linien deuten die unterschiedlichen Strömungsrichtungen innerhalb der Verdampfer an.

## Patentansprüche

1. **Verfahren** zum Betreiben einer Mischkammer für einen Reformer, bei dem ein Kraftstoff verdampft und mit einem Oxidationsmittel vermischt wird,
mit den Schritten
- über eine Einstoffdüse wird flüssiger, kalter Kraftstoff in eine erste Zone der Mischkammer eingeleitet und zerstäubt,
- über eine zweite Düse wird Wasserdampf tangential zum zerstäubten Kraftstoffstrom ebenfalls in die erste Zone der Mischkammer eingeleitet,
- beim Kontakt des flüssigen, kalten zerstäubten Kraftstoff mit dem Wasserdampf kommt es zu einer Verdampfung des Kraftstoffs,
- dem verdampften Kraftstoff wird abstromig zu dem eingeleiteten Kraftstoff und dem Wasserdampf an der Grenze zu einer zweiten Zone der Mischkammer ein Oxidationsmittel zugeführt und gleichmäßig mit diesem gemischt.

2. Verfahren nach vorhergehendem Anspruch 1, bei dem der zugeführte Wasserdampf eine Temperatur zwischen 350 und 500 °C aufweist.

3. Verfahren nach einem der vorhergehenden Ansprüche 1 bis 2, bei dem als Kraftstoff Diesel zugeführt wird.

4. Verfahren nach einem der vorhergehenden Ansprüche 1 bis 3, bei dem als Oxidationsmittel Luft zugeführt wird.

5. Verfahren nach einem der vorhergehenden Ansprüche 1 bis 4, bei dem der Kraftstoff axial zerstäubt wird.

6. Verfahren nach einem der vorhergehenden Ansprüche 1 bis 5, bei dem das Oxidationsmittel tangential über einen Düsenkranz zugeführt wird.

7. Verfahren nach einem der vorhergehenden Ansprüche 1 bis 6, bei dem der Kraftstoff bei Umgebungstemperatur zugeführt wird.

8. Verfahren nach einem der vorhergehenden Ansprüche 1 bis 7, bei dem das Oxidationsmittel bei Umgebungstemperatur zugeführt wird.

9. **Mischkammer** zur Durchführung des Verfahrens nach einem der vorhergehenden Ansprüche 1 bis 8,
- mit einer Zuführungsleitung für einen flüssigen Kraftstoff und einer zentral an einer Stirnseite der Mischkammer angeordneten Einstoffdüse, so dass sich der aus der Düse austretende Strahl gleichmäßig und nahezu parallel zur Achse in einer ersten Zone der Mischkammer verteilen kann, wobei die erste Zone als Zyklon ausgebildet ist,
- mit einer tangentialen Zuführung von Wasserdampf in die erste Zone der Mischkammer und
- mit einer Zuführung von Oxidationsmittel abstromig zur Zuführung des Kraftstoffs und des Wasserdampfes an der Grenze zu einer zweiten Zone der Mischkammer, wobei die Oxidationsmittelzuführung im Bereich einer Verengung des Strömungsquerschnittes vorgesehen ist.

10. Mischkammer nach vorhergehendem Anspruch 9, mit wenigstens einer radialen Zuführung für das Oxidationsmittel.

11. Mischkammer nach einem der vorhergehenden Ansprüche 9 bis 10, mit einem ringförmigen Spalt zwischen der ersten und der zweiten Zone der Mischkammer zum Abzug von nicht verdampfbaren Partikeln.

12. Mischkammer nach einem der vorhergehenden Ansprüche 9 bis 11, bei der für die Zuführung des Oxidationsmittels ein Düsenkranz vorgesehen ist.

## Claims

1. A method for operating a mixing chamber for a reformer, wherein a fuel is evaporated and mixed with an oxidizing agent, having the steps
- a liquid, cold fuel is introduced into a first zone of the mixing chamber and atomized through a single-substance nozzle,
- water vapour is also introduced into the first zone of the mixing chamber through a second nozzle tangentially to the atomized fuel flow,
- upon contact of the liquid, cold atomized fuel with the water vapour, a vaporisation of the fuel will occur,
- an oxidizing agent is supplied to the evaporated fuel and evenly mixed with it downstream of the introduced fuel and the water vapour at the border of a second zone of the mixing chamber.

2. The method according to preceding claim 1, wherein the supplied water vapour has a temperature between 350, and 500°C.

3. The method according any one of the preceding claims 1 to 2, wherein diesel is supplied as fuel.

4. The method according any one of the preceding claims 1 to 3, wherein air is supplied as an oxidizing agent.

5. The method according any one of the preceding claims 1 to 4, wherein the fuel is atomized axially.

6. The method according any one of the preceding claims 1 to 5, wherein the oxidizing agent is supplied tangentially through a nozzle ring.

7. The method according any one of the preceding claims 1 to 6, wherein the fuel is supplied at a surrounding temperature.

8. The method according any one of the preceding claims 1 to 7, wherein the oxidizing agent is supplied at a surrounding temperature.

9. A mixing chamber for performing the method according any one of the preceding claims 1 to 8,
- with a supply line for a liquid fuel and a single-substance nozzle arranged centrally on an end side of the mixing chamber, thereby allowing the beam emerging from the nozzle to be distributed evenly and almost parallel to the axis in a first zone of the mixing chamber, wherein the first zone is designed as a cyclone,
- with a tangential supply of water vapour into the first zone of the mixing chamber and
- with a supply of an oxidizing agent downstream of the supply of the fuel and of the water vapour at the border of a second zone of the mixing chamber, wherein the oxidizing agent supply is provided in the region of a narrowing of the flow cross-section.

10. The mixing chamber according to preceding claim 9, having at least a radial supply for the oxidizing agent.

11. The mixing chamber according to any one of the preceding claims 9 to 10, having an annular gap between the first and the second zone of the mixing chamber for removal of non-evaporable particles.

12. The mixing chamber according to any one of the preceding claims 9 to 11, wherein a nozzle ring is provided for the supply of the oxidizing agent.

## Revendications

1. Procédé pour faire fonctionner une chambre de mélange d'un reformeur, dans lequel on évapore un carburant et on le mélange à un agent d'oxydation,
comprenant les stades
- par une buse d'entrée, on envoie et pulvérise du carburant liquide froid dans une première zone de la chambre de mélange,
- par une deuxième buse, on introduit de la vapeur d'eau tangentiellement au courant de carburant pulvérisé également dans la première zone de la chambre de mélange,
- au contact du carburant liquide froid pulvérisé avec la vapeur d'eau, il se produit une évaporation du carburant,
- on ajoute au carburant évaporé, en aval du carburant introduit et de la vapeur d'eau, à la limite avec une deuxième zone de la chambre de mélange, un agent d'oxydation et on le mélange uniformément à celui-ci.

2. Procédé suivant la revendication 1 précédente, dans lequel la vapeur d'eau ajoutée a une température comprise entre 350 et 500°C.

3. Procédé suivant l'une des revendications 1 à 2 précédentes, dans lequel on apporte du diesel comme carburant.

4. Procédé suivant l'une des revendications 1 à 3 précédentes, dans lequel on apporte de l'air comme agent d'oxydation.

5. Procédé suivant l'une des revendications 1 à 4 précédentes, dans lequel on pulvérise axialement le carburant.

6. Procédé suivant l'une des revendications 1 à 5 précédentes, dans lequel on apporte l'agent d'oxydation tangentiellement par une couronne de buse.

7. Procédé suivant l'une des revendications 1 à 6 précédentes, dans lequel on apporte le carburant à la température ambiante.

8. Procédé suivant l'une des revendications 1 à 7 précédentes, dans lequel on apporte l'agent d'oxydation à la température ambiante.

9. Chambre de mélange pour effectuer le procédé suivant l'une des revendications 1 à 8 précédentes,
- comprenant un conduit d'apport d'un carburant liquide et une buse d'entrée disposée centralement sur un côté frontal de la chambre de mélange, de manière à pouvoir répartir le jet sortant de la buse uniformément et à peu près parallèlement à l'axe dans une première zone de la chambre de mélange, la première zone étant constituée en cyclone,
- comprenant un apport tangentiel de vapeur d'eau dans la première zone de la chambre de mélange et
- comprenant un apport d'agent d'oxydation en aval de l'apport du carburant et de la vapeur d'eau à la limite avec une deuxième zone de la chambre de mélange, l'apport d'agent d'oxydation étant prévu dans la région d'un rétrécissement de la section transversale d'écoulement.

10. Chambre de mélange suivant la revendication 9 précédente, comprenant au moins un apport radial de l'agent d'oxydation.

11. Chambre de mélange suivant l'une des revendications 9 à 10 précédentes, comprenant un intervalle annulaire entre la première et la deuxième zone de la chambre de mélange pour l'évacuation de particules ne pouvant pas s'évaporer.

12. Chambre de mélange suivant l'une des revendications 9 à 11 précédentes, dans lequel il est prévu une couronne de buse pour l'apport de l'agent d'oxydation.
